# EUROPÄISCHE PATENTSCHRIFT

(11) **EP 3 692 554 B1**
(45) Veröffentlichungstag und Bekanntmachung des Hinweises auf die Patenterteilung: **21.04.2021**
(21) Anmeldenummer: 18786673.6
(22) Anmeldetag: 26.09.2018
(51) Int. Cl.: H01F 27/02, H01F 38/14, H02J 50/10, H05K 5/02

(54) **SYSTEM ZUR BERÜHRUNGSLOSEN ÜBERTRAGUNG VON ELEKTRISCHER ENERGIE AN EIN AUF EINEM BODEN EINER ANLAGE BEWEGBAR ANGEORDNETES MOBILTEIL**
SYSTEM FOR NON-CONTACT TRANSMISSION OF ELECTRICAL ENERGY TO A MOBILE PART MOVABLY ARRANGED ON THE BOTTOM OF A FACILITY
SYSTÈME DE TRANSMISSION SANS CONTACT D'ÉNERGIE ÉLECTRIQUE À UN ÉLÉMENT MOBILE POSITIONNÉ DÉPLAÇABLE SUR LE FOND D'UNE INSTALLATION

(30) Priorität: 05.10.2017 DE 102017009254
(43) Veröffentlichungstag der Anmeldung: 12.08.2020
(73) Patentinhaber: SEW-EURODRIVE GmbH & Co. KG, 76646 Bruchsal (DE)
(72) Erfinder: EGGER, Björn, 76646 Bruchsal (DE); JAHN, Nils-Malte, 69124 Heidelberg (DE); BÖSER, Andreas, 76646 Bruchsal (DE); MAHLEIN, Jochen, 76139 Karlsruhe (DE)
(86) Internationale Anmeldenummer: PCT/EP2018/025248
(87) Internationale Veröffentlichungsnummer: WO 2019/068365

(56) Entgegenhaltungen:
- DE-A1-102008 005 395
- DE-A1-102009 057 437
- DE-A1-102010 025 979
- DE-A1-102012 202 472
- DE-U1-202012 101 853

## Beschreibung

Die Erfindung betrifft ein System zur berührungslosen Übertragung von elektrischer Energie an ein auf einem Boden einer Anlage bewegbar angeordnetes Mobilteil.

Aus der DE 10 2009 057 437 A1 ist bekannt, dass über eine induktive Kopplung elektrische Energie berührungslos übertragbar ist.

Aus der US 2017 / 0 237 295 A1 ist ein System zur berührungslosen Übertragung von elektrischer Energie bekannt.

Aus der US 2014 / 0 361 635 A1 ist ein System zur berührungslosen Übertragung von elektrischer Energie bekannt.

Aus der WO 2013 / 125 556 A1 ist ein System zur berührungslosen Übertragung von elektrischer Energie bekannt.

Aus der US 2014 / 0 055 089 A1 ist ein System zur berührungslosen Übertragung von elektrischer Energie bekannt.

Aus der US 2010 / 0 224 725 A1 ist ein System zur berührungslosen Übertragung von Energie an Flugobjekte bekannt.

Aus der DE 20 2012 101 853 U1 ist als nächstliegender Stand der Technik eine Vorrichtung zur induktiven Übertragung elektrischer Energie bekannt.

Aus der DE 10 2012 202 472 A1 ist eine Vorrichtung zur kontaktlosen Übertragung von Energie auf eine korrespondierende Vorrichtung bekannt.

Aus der DE 10 2009 057 437 A1 ist eine Anordnung zum induktiven Beladen eines Energiespeichers eines Fahrzeugs bekannt.

Aus der DE 10 2008 005 395 A1 ist ein Verfahren zur Herstellung eines Geräts bekannt.

Aus der DE 10 2010 0259 979 A1 ist ein Gerät mit einer Anordnung zum Entlüften eines Raumbereichs bekannt.

Der Erfindung liegt daher die Aufgabe zugrunde, ein System zur berührungslosen Beladung eines Mobilteils einer Anlage mit verbessertem Schutz auszustatten.

Erfindungsgemäß wird die Aufgabe bei dem System nach den in Anspruch 1 angegebenen Merkmalen gelöst.

Wichtige Merkmale der Erfindung bei dem System sind, dass das System zur berührungslosen Übertragung von elektrischer Energie an ein auf einem Boden einer Anlage bewegbar angeordnetes Mobilteil vorgesehen ist,
wobei eine Ladeeinheit in einer Ausnehmung des Bodens angeordnet ist,
wobei die Ladeeinheit ein Aufnahmeteil aufweist, an dessen Oberseite ein oberes Deckelteil angeordnet ist und an dessen Unterseite ein unteres Deckelteil angeordnet ist,
wobei im oberen Deckelteil, insbesondere an der Innenseite des oberen Deckelteils, eine Primärwicklung aufgenommen ist,
wobei das Aufnahmeteil zumindest teilweise einen Raumbereich begrenzt, in welchem eine elektronische Schaltung angeordnet ist,
wobei eine durch das untere Deckelteil durchgehende Bohrung mit ihrem ersten Endbereich in den Raumbereich mündet und mit ihrem anderen Endbereich in einen weiteren

Raumbereich mündet, der zumindest teilweise begrenzt ist von einer am unteren Deckelteil ausgeformten, insbesondere nach unten sich aus dem unteren Deckelteil erhebenden Haubenwand,
wobei eine Membran an der Bohrung angeordnet ist.

Von Vorteil ist dabei, dass einen verbesserten Schutz gegen Eindringen von Feuchtigkeit in den Bereich der elektronischen Schaltung gewährleistet ist. Hierzu ist einerseits die Membran an der Bohrung angeordnet und andererseits eine Haube um die Membran herum angeordnet, welche als Taucherglocke wirkt. Somit ist auch bei ansteigendem Grundwasser ein Schutz vorhanden.

Erfindungsgemäß weist die Ladeeinheit ein Ringteil auf, welches auf einer Stufe der als Stufenbohrung ausgeführten Ausnehmung aufgelegt ist. Von Vorteil ist dabei, dass die Ladeeinheit im Boden vorsehbar ist. Das Ringteil ermöglicht ein genaues Ausrichten der Ladeeinheit, so dass die Oberfläche der Ladeeinheit in Flucht bringbar ist mit der Verfahrfläche und damit ein ungestörtes Überfahren der Ladeeinheit ermöglicht ist.

Bei einer vorteilhaften Ausgestaltung ist die Aufnahmeeinheit mit dem Ringteil schraubverbunden. Von Vorteil ist dabei, dass eine einfache und stabile Befestigung ermöglicht ist. Außerdem ist die Aufnahmeeinheit an einem Zentrierrand des Ringteils ausrichtbar. Dabei ist wichtig, dass das Ringteil in der in das Bodenmaterial eingebrachten Stufenbohrung exakt ausgerichtet wird, bevor es mit dem Bodenmaterial verbunden wird, insbesondere schraubverbunden mittels in Dübeln eingebrachten Schrauben oder stoffschlüssig verbunden mittels Vergussmasse.

Bei einer vorteilhaften Ausgestaltung ist das obere Deckelteil mit dem Aufnahmeteil schraubverbunden und mittels zwischengeordneter Dichtung dicht verbunden. Von Vorteil ist dabei, dass eine dichte, insbesondere luftdruckdichte, Abdichtung des Raumbereichs erreichbar ist.

Bei einer vorteilhaften Ausgestaltung ist das obere Deckelteil mit dem Aufnahmeteil schraubverbunden und mittels zwischengeordneter Dichtung dicht verbunden. Von Vorteil ist dabei, dass eine dichte, insbesondere luftdruckdichte, Abdichtung des Raumbereichs erreichbar ist.

Bei einer vorteilhaften Ausgestaltung ist der Raumbereich vom oberen Deckelteil, vom unteren Deckelteil und vom Aufnahmeteil begrenzt und/oder umgeben, insbesondere wobei der Raumbereich durch die dichte Verbindung zwischen Aufnahmeteil und oberem Deckelteil sowie zwischen Aufnahmeteil und unterem Deckelteil abgedichtet ist zur Umgebung hin. Von Vorteil ist dabei, dass der Raumbereich druckdicht abgedichtet in der Ladeeinheit angeordnet ist und der thermisch bedingte Luftdruckausgleich nur über die Bohrung erfolgt.

Erfindungsgemäß ist die Membran semipermeabel, insbesondere wasserundurchlässig und luftdurchlässig. Von Vorteil ist dabei, dass ein Luftdruckausgleich ungehindert durch die Membran erfolgt, aber keine Wasserdurchlässigkeit erreichbar ist.

Bei einer vorteilhaften Ausgestaltung ist die Membran den zweiten Endbereich überdeckt und/oder am unteren Deckelteil befestigt. Von Vorteil ist dabei, dass der Luftaustausch zwischen dem Raumbereich und dem weiteren Raumbereich nur über die Membran erfolgt. Somit ist die erfindungsgemäße Sicherheit gegen das Eindringen von Wasser in den Raumbereich gewährleistbar.

Bei einer vorteilhaften Ausgestaltung ist die Haubenwand um die Membran, die Mündungsöffnung der Bohrung zum weiteren Raumbereich hin und/oder den unteren Endbereich der Bohrung umlaufend ausgebildet. Von Vorteil ist dabei, dass die Haubenwand beabstandet ist von der Membran und somit der weitere Raumbereich groß dimensionierbar ist, ohne dass die Haubenwand sehr lange dimensioniert werden müsste.

Bei einer vorteilhaften Ausgestaltung ist die Membran und/oder die Mündungsöffnung der Bohrung am oberen Endbereich des weiteren Raumbereichs angeordnet. Von Vorteil ist dabei, dass eine maximale Ausnutzung der Schutzfunktion des weiteren Raumbereichs erreichbar ist.

Erfindungsgemäß ist die Haubenwand mit dem unteren Deckelteil einstückig, insbesondere einteilig, ausgeformt, insbesondere aus Metall oder Kunststoff. Von Vorteil ist dabei, dass eine einfache Herstellung erreichbar ist und eine Dichtigkeit für den weiteren Raumbereich in einfacher Weise erreichbar ist.

Bei einer vorteilhaften Ausgestaltung ist die elektronische Schaltung einen Wechselrichter aufweist, dessen wechselspannungsseitiger Anschluss mit der Eingangsseite eines Vierpols, insbesondere Gyrators, verbunden, wobei die Ausgangsseite des Vierpols die Primärwicklung speist, insbesondere wobei der Vierpol Bauelemente, wie zumindest eine Induktivität und eine Kapazität, aufweist, wobei die Bauelemente auf die Frequenz der vom Wechselrichter an seinem wechselspannungsseitigen Anschluss bereit gestellten Wechselspannung resonant abgestimmt sind. Von Vorteil ist dabei, dass auch bei schwankendem Abstand von der Primärwicklung zur Sekundärwicklung ein hoher Wirkungsgrad bei der induktiven Energieübertragung erreichbar ist.

Erfindungsgemäß ist ein Kabel zur elektrischen Versorgung der elektronischen Schaltung durch ein im Bodenmaterial verlegtes Leerrohr zu einer am unteren Deckelteil angeordneten Kabelverschraubung geführt, so dass das Kabel abgedichtet durch das untere Deckelteil hindurch in den Raumbereich geführt ist. Von Vorteil ist dabei, dass die Energiezufuhr in hoher Schutzart erfolgt.

Bei einer vorteilhaften Ausgestaltung ist zwischen Aufnahmeteil und Bodenmaterial Vergussmasse angeordnet. Von Vorteil ist dabei, dass das Eindringen von Wasser in die Stufenbohrung des Bodenmaterials erschwert ist.

Bei einer vorteilhaften Ausgestaltung ist die Oberfläche des oberen Deckelteils bündig mit der Verfahrfläche, also Oberfläche des Bodenmaterials, angeordnet, so dass ein Überfahren des oberen Deckelteils für das Mobilteil ermöglicht ist. Von Vorteil ist dabei, dass ein Überfachen der Ladeeinheit ermöglicht ist. Hierzu ist das obere deckelteil vorzugsweise aus Kunststoff ausgeführt.

Weitere Vorteile ergeben sich aus den Unteransprüchen.

Die Erfindung wird nun anhand von schematischen Abbildungen näher erläutert:

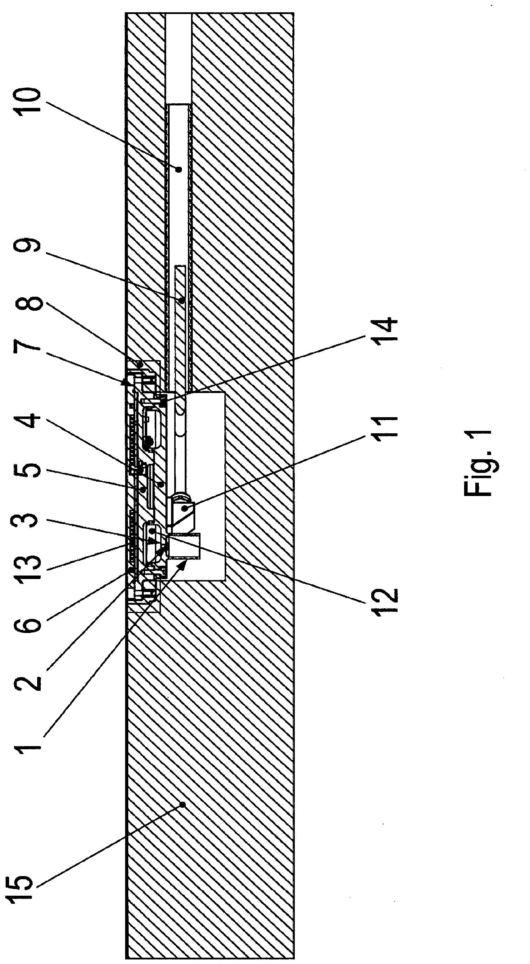

In der Figur 1 ist ein Querschnitt durch ein erfindungsgemäßes System schematisch dargestellt.

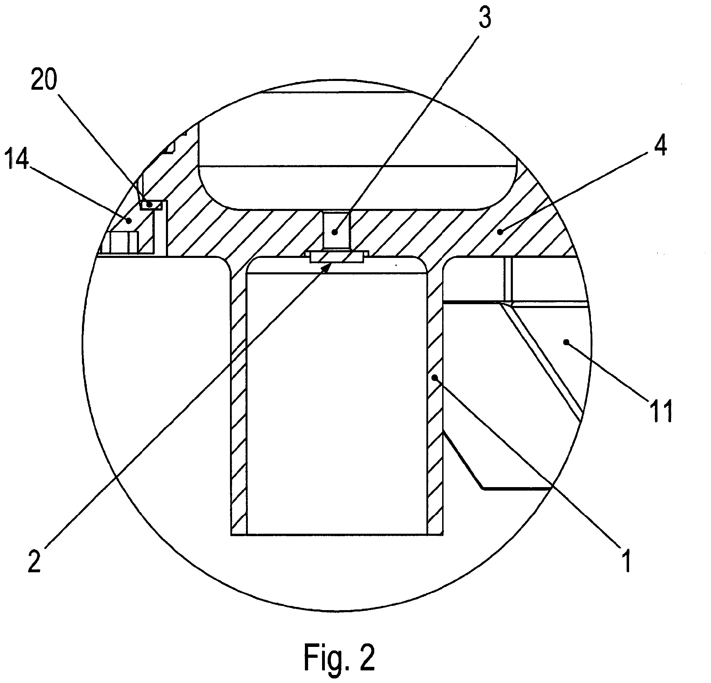

IN der Figur 2 ist ein vergrößerter Ausschnitt der Figur 1 dargestellt.

Wie in den Figuren gezeigt, weist der Boden einer Anlage Bodenmaterial 15 auf, dessen Oberfläche eine Verfahrfläche für Mobilteile darstellt.

In den Boden ist eine Stufenbohrung eingebracht, in welcher ein als Ladeeinheit für das Mobilteil fungierendes Primärteil aufgenommen ist.

Die Mobilteile weisen an ihrer Unterseite Sekundärwicklungen auf, so dass elektrische Energie induktiv übertragbar an die Mobilteile ist.

Hierzu weist das Primärteil ein Aufnahmeteil 5 auf, an dessen Oberseite ein oberes Deckelteil 6, insbesondere ein Kunststoffdeckel, mit Primärwicklung 13 aufgenommen ist und an dessen Unterseite ein unteres Deckelteil 4 aufgenommen ist.

Die Primärwicklung 13 ist an der Unterseite des oberen Deckelteils in rechteck- oder kreisspiralförmig verlaufende Nuten eingelegt.

Das obere Deckelteil 6 ist mittels Schrauben mit dem Aufnahmeteil 5 schraubverbunden und dicht mittels einer Dichtung, insbesondere Flachdichtung, mit dem Aufnahmeteil 5 verbunden.

Das untere Deckelteil 4 ist mittels Schrauben 14 mit dem Aufnahmeteil 5 schraubverbunden und ebenfalls mittels einer zweiten Dichtung 20, insbesondere Flachdichtung, dicht mit dem Aufnahmeteil 5 verbunden.

Im Aufnahmeteil 5 ist ein Raumbereich zur Aufnahme von Elektronik ausgebildet. Im Bodenbereich ist ein Kabelkanal ausgebildet, in welchem ein Leerrohr 10 verlegt ist, in welchem ein Kabel 9 bis hin zu einer am unteren Deckelteil 4angeordneten Kabelverschraubung 11 geführt ist. Durch diese Kabelverschraubung 11 ist das Kabel 9 dicht führbar und weiter durch eine Ausnehmung im unteren Deckelteil 4 zum Raumbereich 12. Somit ist die Elektronik mit elektrischer Energie versorgbar. Vorzugsweise weist die Elektronik einen Wechselrichter auf, dessen wechselspannungsseitiger Anschluss einen Gyrator speist, dessen Kapazität und Induktivität auf Resonanz zu der Frequenz der Wechselspannung am wechselspannungsseitigen Anschluss abgestimmt ist. Somit ist einem aus der Primärwicklung und einer Kapazität gebildeten Schwingkreis Strom aus dem Gyrator als stromquellenartige Energiequelle zuführbar.

Der Schwingkreis ist derart dimensioniert, dass seine Resonanzfrequenz auf die Frequenz abgestimmt ist, also der Frequenz gleicht.

Die Anschlussdrähte der Primärwicklung 13 sind also zur im Aufnahmeteil 5 angeordneten Elektronik geführt.

An der Unterseite des unteren Deckelteils 4 ist eine durchgehende Bohrung angeordnet, welche in den Raumbereich mündet. Eine semipermeable Membran ist an der Bohrung angeordnet, so dass zwar Luft durch die Bohrung in den Raumbereich gelangen kann oder vom Raumbereich durch die Bohrung austreten kann, nicht aber Wasser. Die Membran ist also luftdurchlässig und wasserundurchlässig, also hydrophob.

Die an der Unterseite des unteren Deckelteils 4 angeordnete Mündung der Bohrung mündet in einen von einem Haubenbereich 1 umgebenen Raumbereich. Dieser Haubenbereich 1 ist nach unten gerichtet. Hierzu weist der Haubenbereich 1 eine umlaufende Haubenwand auf, welche vom unteren Deckelteil 4 nach unten hervorragt. Die Haubenwand umläuft dabei die Mündung der Bohrung, so dass gegebenenfalls auftretendes und ansteigendes Grundwasser nur gegen das Ansteigen im vom Haubenbereich umgebenen Raumbereich wirkende Luftdruckerhöhung ansteigen kann. Wenn also der Wasserstand außerhalb des Haubenbereichs 1 ansteigt, ist ein Ansteigen im vom Haubenbereich umgebenen Raumbereich geringer. Zusätzliche Sicherheit gegen das Eindringen von Wasser in den vom Aufnahmeteil aufgenommenen Raumbereich bewirkt auch die Membran 2.

Somit ist eine hohe Sicherheit erreicht.

Die Oberseite des oberen Deckelteils 6 ist bündig mit der Oberfläche des Bodenbereichs ausgeführt, so dass das Primärteil vom Mobilteil überfahrbar ist.

Das Aufnahmeteil 5 ist an seinem äußeren Umfang mit einem Ring verbunden, der auf einer Stufe der im Bodenmaterial eingebrachten Stufenbohrung aufgelegt ist.

Der Zwischenraum zwischen Primärteil und Bodenmaterial wird mit Vergussmasse 8 zumindest teilweise befüllt.

Wenn nun am Haubenbereich Wasser ansteht und die Temperatur der Elektronik sich erhöht, dehnt sich das Luftvolumen im Raumbereich und im Haubenbereich aus. Bei Abkühlung der Elektronik zieht es sich zusammen. Denn die sich ausdehnende Luft durchfließt die Membran 2 in beide Richtungen ungehindert.

Die Haubenwand ist einstückig mit dem unteren Deckelteil 4 ausgebildet, insbesondere aus Metall oder Kunststoff.

Vorzugsweise deckt die Membran die Mündung der Bohrung ab.

In der vorgenannten Beschreibung bezieht sich "unten" auf die Gravitationsrichtung. Somit ist das untere Deckelteil in Gravitationsrichtung unterhalb des Aufnahmeteils angeordnet und das obere Deckelteil oberhalb des Aufnahmeteils, also entgegengesetzt zur Gravitationsrichtung.

Bei weiteren erfindungsgemäßen Ausführungsbeispielen wird statt des Haubenabschnitts eine elastische Hülle am unteren Deckelteil 4 um die Mündung der Bohrung herum angeordnet. Somit ist eine noch weiter erhöhte Sicherheit gegen das Eindringen von Wasser erreicht, das das Material der elastischen Hülle wasserundurchlässig und luftundurchlässig ist.

Bei weiteren erfindungsgemäßen Ausführungsbeispielen sind im Raumbereich der elektronischen Schaltung und/oder an der Innenseite des unteren Deckelteils 4 Kondensatoren angeordnet, welche als mit der Primärwicklung parallel und/oder in Reihe geschaltete Kapazität wirken und somit zusammen mit der Primärwicklung den Schwingkreis bilden. Dabei ist die

Kapazität derart, dass die Resonanzfrequenz des Schwingkreises der Frequenz der am wechselspannungsseitigen Anschluss bereit gestellten Wechselspannung gleicht.

### Bezugszeichenliste

1 Haubenabschnitt
2 Membran, insbesondere semipermeable Membran
3 Bohrung, insbesondere durchgehend
4 unteres Deckelteil
5 Aufnahmeteil
6 oberes Deckelteil, insbesondere Kunststoffdeckel
7 erste Dichtung, insbesondere Flachdichtung
8 Verguss
9 Kabel
10 Leerrohr
11 Kabelverschraubung
12 Raumbereich
13 Primärwicklung
14 Schraube
15 Bodenmaterial
20 zweite Dichtung

## Patentansprüche

1. System zur berührungslosen Übertragung von elektrischer Energie an ein auf einem Boden einer Anlage bewegbar angeordnetes Mobilteil,
wobei eine Ladeeinheit in einer Ausnehmung des Bodens angeordnet ist,
**wobei** die Ladeeinheit ein Aufnahmeteil aufweist, an dessen Oberseite ein oberes Deckelteil (6) angeordnet ist und an dessen Unterseite ein unteres Deckelteil (4) angeordnet ist, wobei im oberen Deckelteil (6), insbesondere an der Innenseite des oberen Deckelteils (6),
eine Primärwicklung (13) aufgenommen ist,
wobei das Aufnahmeteil zumindest teilweise einen Raumbereich begrenzt, in welchem eine elektronische Schaltung angeordnet ist,
wobei eine durch das untere Deckelteil (4) durchgehende Bohrung (3) mit ihrem ersten Endbereich in den Raumbereich mündet und mit ihrem anderen Endbereich in einen weiteren Raumbereich mündet, der zumindest teilweise begrenzt ist von einer am unteren Deckelteil (4) ausgeformten, **nach unten sich aus dem unteren Deckelteil (4) erhebenden** Haubenwand,
wobei eine Membran (2) an der Bohrung (3) angeordnet ist,
**wobei die Membran (2) semipermeabel ist, insbesondere wasserundurchlässig und** luftdurchlässig,
**wobei die Ladeeinheit ein Ringteil aufweist, welches auf einer Stufe der als Stufenbohrung ausgeführten Ausnehmung aufgelegt ist,**
die Haubenwand mit dem unteren Deckelteil (4) einstückig, insbesondere einteilig, ausgeformt ist, insbesondere aus Metall oder Kunststoff,
wobei ein Kabel zur elektrischen Versorgung der elektronischen Schaltung durch ein im Bodenmaterial (15) verlegtes Leerrohr zu einer am unteren Deckelteil (4) angeordneten Kabelverschraubung geführt ist, so, dass das Kabel abgedichtet durch das untere Deckelteil (4) hindurch in den Raumbereich geführt ist.

2. **System nach Anspruch 1,**
**dadurch gekennzeichnet, dass**
die Aufnahmeeinheit mit dem Ringteil schraubverbunden ist.

3. System nach mindestens einem der vorangegangenen Ansprüche,
**dadurch gekennzeichnet, dass**
das obere Deckelteil (6) mit dem Aufnahmeteil schraubverbunden ist und mittels zwischengeordneter Dichtung dicht verbunden ist.

4. **System nach mindestens einem der vorangegangenen Ansprüche,**
**dadurch gekennzeichnet, dass**
im Raumbereich und/oder an der Innenseite des unteren Deckelteils (4) Kondensatoren, insbesondere zur Kompensation, angeordnet sind.

5. System nach mindestens einem der vorangegangenen Ansprüche,
**dadurch gekennzeichnet, dass**
der Raumbereich vom oberen Deckelteil (6), vom unteren Deckelteil (4) und vom Aufnahmeteil begrenzt und/oder umgeben ist,
insbesondere wobei der Raumbereich durch die dichte Verbindung zwischen Aufnahmeteil und oberem Deckelteil (6) sowie zwischen Aufnahmeteil und unterem Deckelteil (4) abgedichtet ist zur Umgebung hin.

6. System nach mindestens einem der vorangegangenen Ansprüche,
**dadurch gekennzeichnet, dass**
die Membran (2) den zweiten Endbereich überdeckt und/oder am unteren Deckelteil (4) befestigt ist.

7. System nach mindestens einem der vorangegangenen Ansprüche,
**dadurch gekennzeichnet, dass**
die Haubenwand um die Membran (2), die Mündungsöffnung der Bohrung (3) zum weiteren Raumbereich hin und/oder den unteren Endbereich der Bohrung (3) umlaufend ausgebildet ist.

8. System nach mindestens einem der vorangegangenen Ansprüche,
**dadurch gekennzeichnet, dass**
die Membran (2) und/oder die Mündungsöffnung der Bohrung (3) am oberen Endbereich des weiteren Raumbereichs angeordnet ist.

9. System nach mindestens einem der vorangegangenen Ansprüche,
**dadurch gekennzeichnet, dass**
die elektronische Schaltung einen Wechselrichter aufweist, dessen wechselspannungsseitiger Anschluss mit der Eingangsseite eines Vierpols, insbesondere Gyrators, und/oder Transformators verbunden ist, wobei die Ausgangsseite des Vierpols die Primärwicklung (13) speist,
insbesondere wobei der Vierpol Bauelemente, wie zumindest eine Induktivität und eine Kapazität, aufweist, wobei die Bauelemente auf die Frequenz der vom Wechselrichter an seinem wechselspannungsseitigen Anschluss bereit gestellten Wechselspannung resonant abgestimmt sind.

10. System nach mindestens einem der vorangegangenen Ansprüche,
**dadurch gekennzeichnet, dass**
zwischen Aufnahmeteil und Bodenmaterial (15) Vergussmasse angeordnet ist.

11. System nach mindestens einem der vorangegangenen Ansprüche,
**dadurch gekennzeichnet, dass**
die Oberfläche des oberen Deckelteils (6) bündig mit der Verfahrfläche, also Oberfläche des Bodenmaterials (15), angeordnet ist, so dass ein Überfahren des oberen Deckelteils (6) für das Mobilteil ermöglicht ist.

## Claims

1. A system for the contactless transmission of electrical energy to a mobile part movably arranged on a base of an installation,
wherein a charging unit is arranged in a cut-out of the base,
wherein the charging unit has a receiving part at the upper side of which there is arranged an upper cover part (6) and at the lower side of which there is arranged a lower cover part (4), wherein a primary winding (13) is received in the upper cover part (6), in particular at the inner side of the upper cover part (6),
wherein the receiving part at least partially bounds a spatial region in which there is arranged an electronic circuit,
wherein a bore (3) passing through the lower cover part (4) opens with its first end region into the spatial region and with its other end region into a further spatial region which is at least partially bounded by a hood wall formed at the lower cover part (4) and extending downwards from the lower cover part (4),
wherein a membrane (2) is arranged at the bore (3),
wherein the membrane (2) is semi-permeable, in particular impermeable to water and permeable to air,
wherein the charging unit has a annular part which is placed on a step of the cut-out configured as a stepped bore,
the hood wall is formed in one piece with the lower cover part (4), in particular as one part, in particular from metal or plastics material,
wherein a cable for supplying electricity to the electronic circuit is guided through an empty conduit, laid in the base material (15), to a screw-type cable fitting arranged at the lower cover part (4), in particular in such a manner that the cable is guided in a sealed manner through the lower cover part (4) into the spatial region.

2. A system according to claim 1,
**characterised in that**
the receiving unit is screw-connected to the annular part.

3. A system according to at least one of the preceding claims,
**characterised in that**
the upper cover part (6) is screw-connected to the receiving part and is sealingly connected by means of an interposed seal.

4. A system according to at least one of the preceding claims,
**characterised in that**
capacitors, in particular for compensation, are arranged in the spatial region and/or at the inner side of the lower cover part (4).

5. A system according to at least one of the preceding claims,
**characterised in that**
the spatial region is bounded and/or surrounded by the upper cover part (6), by the lower cover part (4) and by the receiving part,
in particular wherein the spatial region is sealed to the surroundings by the sealed connection between receiving part and upper cover part (6) as well as between receiving part and lower cover part (4).

6. A system according to at least one of the preceding claims,
**characterised in that**
the membrane (2) covers the second end region and/or is secured to the lower cover part (4).

7. A system according to at least one of the preceding claims,
**characterised in that**
the hood wall encircles the membrane (2), the mouth opening of the bore (3), towards the further spatial region, and/or the lower end region of the bore (3).

8. A system according to at least one of the preceding claims,
**characterised in that**
the membrane (2) and/or the mouth opening of the bore (3) is/are arranged at the upper end region of the further spatial region.

9. A system according to at least one of the preceding claims,
**characterised in that**
the electronic circuit has an inverter whose connection at the alternating voltage side is connected to the input side of a quadrupole, in particular gyrator, and/or transformer, wherein the output side of the quadrupole feeds the primary winding (13),
in particular wherein the quadrupole has components, such as at least one inductor and one capacitor, wherein the components are matched resonantly to the frequency of the alternating voltage provided by the inverter at its connection at the alternating voltage side.

10. A system according to at least one of the preceding claims,
**characterised in that**
sealing compound is arranged between receiving part and base material (15).

11. A system according to at least one of the preceding claims,
**characterised in that**
the surface of the upper cover part (6) is arranged flush with the travel surface, therefore surface of the base material (15), so that travel over the upper cover part (6) is enabled for the mobile part.

## Revendications

1. Système de transmission sans contact d'énergie électrique à un élément mobile positionné déplaçable sur le sol d'une installation,
dans lequel une unité de charge est positionnée dans un évidement du sol,
dans lequel l'unité de charge comprend une partie de réception sur le côté supérieur de laquelle une partie de recouvrement supérieure (6) est positionnée et sur le côté inférieur de laquelle une partie de recouvrement inférieure (4) est positionnée,
dans lequel un enroulement primaire (13) est reçu dans la partie de recouvrement supérieure (6), en particulier sur le côté intérieur de la partie de recouvrement supérieure (6),
dans lequel la partie de réception délimite au moins partiellement une région spatiale dans laquelle un circuit électronique est positionné,
dans lequel un alésage (3) traversant la partie de recouvrement inférieure (4) débouche par sa première région d'extrémité dans la région spatiale et par son autre région d'extrémité dans une autre région spatiale qui est au moins partiellement délimitée par une paroi de coiffe formée sur la partie de recouvrement inférieure (4) et faisant saillie vers le bas à partir de la partie de recouvrement inférieure (4),
dans lequel une membrane (2) est positionnée au niveau de l'alésage (3),
dans lequel la membrane (2) est semi-perméable, en particulier imperméable à l'eau et perméable à l'air, dans lequel l'unité de charge comprend une partie annulaire, laquelle est placée sur un étage de l'évidement réalisé sous forme d'alésage étagé,
la paroi de coiffe est formée d'une seule pièce, en particulier d'un seul tenant, avec la partie de recouvrement inférieure (4), en particulier à partir de métal ou de matière synthétique,
dans lequel un câble servant à l'alimentation électrique du circuit électronique est guidé à travers une gaine posée dans le matériau de sol (15) jusqu'à un presse-étoupe positionné au niveau de la partie de recouvrement inférieure (4), de telle sorte que le câble est guidé de manière étanche à travers la partie de recouvrement inférieure (4) dans la région spatiale.

2. Système selon la revendication 1,
**caractérisé en ce que**
l'unité de réception est reliée par vissage à la partie annulaire.

3. Système selon au moins l'une des revendications précédentes,
**caractérisé en ce que**
la partie de recouvrement supérieure (6) est reliée par vissage à la partie de réception et est reliée de manière étanche au moyen d'un joint d'étanchéité interposé.

4. Système selon au moins l'une des revendications précédentes,
**caractérisé en ce que**
des condensateurs, en particulier pour la compensation, sont positionnés dans la région spatiale et/ou au niveau du côté intérieur de la partie de recouvrement inférieure (4) .

5. Système selon au moins l'une des revendications précédentes,
**caractérisé en ce que**
la région spatiale est délimitée et/ou entourée par la partie de recouvrement supérieure (6), par la partie de recouvrement inférieure (4) et par la partie de réception, en particulier la région spatiale étant rendue étanche vis-à-vis de l'environnement par la liaison étanche entre la partie de réception et la partie de recouvrement supérieure (6) ainsi qu'entre la partie de réception et la partie de recouvrement inférieure (4).

6. Système selon au moins l'une des revendications précédentes,
**caractérisé en ce que**
la membrane (2) recouvre la deuxième région d'extrémité et/ou est fixée à la partie de recouvrement inférieure (4) .

7. Système selon au moins l'une des revendications précédentes,
**caractérisé en ce que**
la paroi de coiffe est réalisée de manière périphérique autour de la membrane (2), de l'ouverture de débouché de l'alésage (3) vers l'autre région spatiale et/ou de la région d'extrémité inférieure de l'alésage (3).

8. Système selon au moins l'une des revendications précédentes,
**caractérisé en ce que**
la membrane (2) et/ou l'ouverture de débouché de l'alésage (3) est/sont positionnée(s) au niveau de la région d'extrémité supérieure de l'autre région spatiale.

9. Système selon au moins l'une des revendications précédentes,
**caractérisé en ce que**
le circuit électronique comprend un onduleur dont la borne côté tension alternative est connectée au côté d'entrée d'un quadripôle, en particulier d'un gyrateur et/ou d'un transformateur, le côté de sortie du quadripôle alimentant l'enroulement primaire (13),
en particulier le quadripôle comprenant des composants, tels qu'au moins une inductance et une capacité, les composants étant adaptés de manière résonante à la fréquence de la tension alternative fournie par l'onduleur au niveau de sa borne côté tension alternative.

10. Système selon au moins l'une des revendications précédentes,
**caractérisé en ce**
**qu'**une masse de scellement est positionnée entre la partie de réception et le matériau de sol (15).

11. Système selon au moins l'une des revendications précédentes,
**caractérisé en ce que**
la surface de la partie de recouvrement supérieure (6) est positionnée en affleurement avec la surface de déplacement, c'est-à-dire la surface du matériau de sol (15), de sorte que l'élément mobile peut être déplacé sur la partie de recouvrement supérieure (6).
